Europäisches Patentamt

European Patent Office

Office européen des brevets

(19)

(11) Veröffentlichungsnummer : **0 424 932 B1**

(12) **EUROPÄISCHE PATENTSCHRIFT**

(45) Veröffentlichungstag der Patentschrift :
**23.12.92 Patentblatt 92/52**

(21) Anmeldenummer : **90120450.3**

(22) Anmeldetag : **25.10.90**

(51) Int. Cl.⁵ : **B60K 23/08, B60K 23/04**

(54) **Verteilergetriebe für Kraftfahrzeuge.**

(30) Priorität : **25.10.89 AT 2457/89**

(43) Veröffentlichungstag der Anmeldung :
**02.05.91 Patentblatt 91/18**

(45) Bekanntmachung des Hinweises auf die
Patenterteilung :
**23.12.92 Patentblatt 92/52**

(84) Benannte Vertragsstaaten :
**DE ES FR GB IT NL SE**

(56) Entgegenhaltungen :
**EP-A- 0 340 209**
**DE-A- 3 822 115**
**DE-C- 3 621 225**

(56) Entgegenhaltungen :
**PATENT ABSTRACTS OF JAPAN vol. 7, no.**
**244 (M-252)(1389) 28 Oktober 1983, & JP-A-58**
**128927 (HITACHI SEISAKUSHO) 01 Au-**
**gust1983,**

(73) Patentinhaber : **STEYR-DAIMLER-PUCH**
**Aktiengesellschaft**
**Postfach 62 Franz-Josefs-Kai 51**
**A-1011 Wien (AT)**

(72) Erfinder : **Reif, Johann Peter, Dr. Dipl.-Ing.**
**Sternallee 143**
**A-5360 St. Wolfgang (AT)**

(74) Vertreter : **Kovac, Werner**
**c/o Steyr-Daimler-Puch AG, Dipl.-Ing. Werner**
**Kovac, Postfach 62**
**A-1011 Wien (AT)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Verteilergetriebe für Kraftfahrzeuge mit einem sperrbaren Ausgleichsgetriebe oder einem zuschaltbaren Antriebsstrang, wobei ein Stelltrieb zum Betätigen der Sperr- oder Zuschaltvorrichtung vorgesehen ist und eine mit Gebern zum Erfassen der Drehmomentbelastung wenigstens zweier der Getriebean- und -abtriebswellen und anderer Fahr- und Betriebszustandsgrößen des Fahrzeuges verbundene Steuerungseinrichtung den Stelltrieb in Abhängigkeit vom Vergleich der aus den eingelesenen Zustandsgrößen sich ergebenden Ist-Kennwerte mit einspeicherbaren Soll-Kennwerten ansteuert.

Verteilergetriebe sollen das Antriebsmoment entsprechend den Traktionsverhältnissen auf die Vorder- und Hinterachsen oder auf die linken und rechten Antriebsräder verteilen und kurvenbe- dingte und geringere schlupfbedingte Drehzahlunterschiede der Räder ausgleichen. Kommt es zu einem größeren Schlupf oder gar einem Durchrutschen der Räder, wird das Aus- gleichsgetriebe gesperrt oder ein zusätzlicher Antriebs- strang zugeschaltet, um auch bei ungünstigen Bodenverhältnissen ordnungsgemäße Antriebs- und Manövrierbedingungen zu erreichen. Zur Automatisierung dieses Sperroder Zuschaltvorganges müssen bisher kraftschlüssige Kupplungen, wie Lamellenkupplungen oder Mehrscheiben-Reibungskupplungen, als Sperr- oder Zuschaltvorrichtungen eingesetzt werden, die den Vorteil einer leichten Zu- und Ausschaltbarkeit mit sich bringen, aber für eine vollständige Sperrwirkung ein übermäßig großes Bauvolumen bzw. große Reibflächen erfordern. Zum entsprechenden Ansteuern des die Kupplungen betätigenden Stelltriebes gibt es eine Steuerungseinrichtung, der verschiedene Daten über den Fahrund Betriebszustand des Fahrzeuges, wie Drehmomentenbelastungen, Rad- und Wellendrehzahlen, Fahrgeschwindigkeit, Lenkeinschlag, Getriebegang, Fahrfußhebelstellung u.dgl., mittels geeigneter Geber eingelesen werden, wobei die Steuerungseinrichtung aus diesen Zustandsgrößen und den daraus abgeleiteten Kennwerten den auftretenden Schlupf erkennt und erforderlichenfalls die Sperr- oder Zuschaltkupplung einrückt. Um dann bei eingerückter Kupplung feststellen zu können, wann wieder die erforderliche Haftung aller Räder auf der Fahrbahn gegeben ist, wird die Kupplung periodisch geöffnet, so daß dann durch die Zustandsgrößen bei geöffneter Sperre oder abgeschaltetem Allradantrieb die übliche Schlupferkennung möglich und die Sperr- oder Zuschaltbedingung überprüfbar ist.

Sperr- oder Zuschaltvorrichtungen aus formschlüssigen Kupplungen zeichnen sich durch ihre volle Sperr- und Kupplungswirkung auch bei kleinem Bauvolumen und geringen Abmessungen aus, doch lassen sich diese formschlüssigen Kupplungen bisher nicht automatisch betätigen, da sie im verspannten Zustand kaum oder überhaupt nicht ausschaltbar sind. Eine Verspannung bei gesperrtem Ausgleich oder zugeschaltetem Antrieb kann aber in der Praxis nicht vermieden werden, wobei für diese Verspannung toleranzbedingte Übersetzungsdifferenzen, verschiedene Reifengrößen und -belastungen, unterschiedliche Reifendrücke und Reifenbauarten u.dgl. verantwortlich sind. Formschlüssige Kupplungen bleiben daher bisher einer händischen Betätigung vorbehalten, wobei zum Abbau der Verspannung und zum Ausschalten der Kupplung meist ein Anhalten des Fahrzeuges mit nachfolgendem Fahrtrichtungswechsel notwendig ist.

Der Erfindung liegt daher die Aufgabe zugrunde, diese Mängel zu beseitigen und ein Verteilergetriebe der eingangs geschilderten Art zu schaffen, dessen Steuerung auf rationelle Weise vor allem ein ordnungsgemäßes Ausschalten der Sperrund Zuschaltvorrichtung gewährleistet und dabei auch eine automatische Betägigung formschlüssiger Kupplungen erlaubt.

Die Erfindung löst diese Aufgabe dadurch, daß nach dem Einschalten der als formschlüssige Kupplung ausgebildeten Sperr- oder Zuschaltvorrichtung als Kennwert zum Ausschalten dieser Kupplung das Verhältnis der an zwei der Getriebewellen auftretenden Drehmomente dient und die Steuerungseinrichtung bei Übereinstimmung dieses laufend ermittelten Momentenverhältnisses als Ist-Kennwert mit einem durch die Getriebeübersetzung bestimmten Momentenverhältnis als Soll-Kennwert zusätzlich zum die Kupplung im Öffnungssinn betätigenden Stelltrieb eine weitere Stellvorrichtung zur Änderung der Drehmomentbelastung des An- und/oder Abtriebsstranges in Abhängigkeit von der Abweichung einer aus dem Drehmoment an der Getriebeantriebswelle und dem bei Fahrt des Fahrzeuges mit gesperrtem Ausgleichsgetriebe oder zugeschaltetem Antriebsstrang im Antriebssystem auftretenden Verspannmoment ermittelten Verhältniszahl als Ist-Kennwert gegenüber einer material- und konstruktionsspezifischen Konstanten als Soll-Kennwert ansteuert. Die Steuerungseinrichtung kann zum Einschalten der Kupplung verschiedene Kennwerte zur Schlupferkennung, beispielsweise die auftretenden Drehmomente, die Drehzahldifferenz od.dgl. geeignete Zustandsgrößen heranziehen und kann durch das Momentenverhältnis als Kennwert zum Ausschalten der Kupplung ohne ein periodisches Lösen der Kupplung bei gesperrtem Ausgleich oder zugeschaltetem Allradantrieb den Zeitpunkt des Ausschaltens der Kupplung genau durch Überwachung zweier der an den drei Getriebewellen auftretenden Drehmomente bestimmen. Da die Summe der drei Drehmomente gleich Null sein muß und die Drehmomentenverteilung an den Getriebewellen vom Übersetzungsverhältnis des Getriebes bestimmt wird, kann aus dem Verhältnis zweier der Drehmomente

2

exakt auf die jeweils vorhandene Drehmomentenverteilung und damit auf die Größe eines auftretenden Schlupfes geschlossen werden. Sinkt der Schlupf unter eine tolerierbare Grenze, ist der Zeitpunkt für das Ausschalten der Kupplung gekommen und die Steuerungseinrichtung gibt einen Steuerimpuls an den entsprechenden Stelltrieb. Allerdings kann der Stelltrieb trotz dieses Steuerimpulses eine als formschlüssige Kupplung ausgebildete Sperr- oder Zuschaltvorrichtung nur dann ausschalten, wenn die vorhandene Verspannung im Antriebsstrang keine zu großen Ausrückkräfte für die Kupplung bedingt. Um nun dieses Auskuppeln zum gewünschten Zeitpunkt zu ermöglichen, steuert die Steuerungseinrichtung eine zusätzliche Stellvorrichtung zur Belastungsänderung des An-und/oder Abtriebsstranges an, wodurch das Verspannmoment entsprechend beeinflußt wird. Es hat sich gezeigt, daß für ein einwandfreies Ausschalten der Kupplung eine bestimmte Schaltbedingung erfüllt sein muß, und zwar muß das Verhältnis von Antriebsmoment des Getriebes zu Verspannmoment einer konstanten, von der Konstruktion und den verwendeten Materialien abhängigen Größe entsprechen. Es ergibt sich die Bedingung:

$$\frac{M_E}{M_{Versp}} = \frac{2 \cdot (1 + \lambda)}{I_{VG} \cdot I_A}$$

für einen zuschaltbaren Allradantrieb und

$$\frac{M_E}{M_{Versp}} = \frac{2 \cdot (1 = \lambda)}{I_{VG} \cdot I_A} \cdot \frac{1 + I_{PLVG}}{I_{PLVG} - \lambda}$$

für sperrbare Ausgleichsgetriebe.

Dabei bedeuten

$M_E$ das Eingangs(= Antriebs)moment des Verteilergetriebes,

$M_{Versp}$ das Verspannmoment,

$\lambda$ das Verhältnis der Steifigkeiten des hinteren und vorderen Antriebswellenstranges,

$I_{PLVG}$ das Übersetzungsverhältnis des Verteilergetriebe-Planetensatzes,

$I_A$ die Achsübersetzung und

$I_{VG}$ das Übersetzungsverhältnis im Verteilergetriebe.

Das Antriebsmoment wird über den Drehmomentengeber ständig der Steuerungseinrichtung eingegeben und das Spannmoment läßt sich rechnerisch oder experimentell durch Messen am Rad vorbestimmen und der Steuerungseinrichtung einspeichern. Genauso werden die material- und konstruktionsspezifischen Werte der Steuerungseinrichtung als Soll-Kennwert eingespeichert, so daß die Steuerungseinrichtung die Abweichung von der Schaltbedingung erkennen kann und dementsprechend die Stellvorrichtung ansteuert. Diese Stellvorrichtung kann dabei an einer Bremse angreifen oder die Einspritzpumpe des Kraftfahrzeugmotors beeinflussen od.dgl., so daß das an der Getriebeantriebswelle auftretende Antriebsmoment im gewünschten Sinne zur Erfüllung der Schaltbedingung korrigiert wird. Ist die Schaltbedingung erfüllt, gibt es keine Schwierigkeiten für das Ausschalten auch formschlüssiger Kupplungen und diese Kupplungen reagieren wunschgemäß auf das Steuersignal.

Sind die bei einer antriebslosen Fahrt mit gesperrtem Ausgleichsgetriebe oder zugeschaltetem Antriebsstrang über die Drehmomentgeber erfaßbaren Drehmomentwerte der Steuerungseinrichtung zur Bestimmung und/oder Justierung des Verspannmomentes eingebbar, können die sich ändernden Einflußgrößen für das Verspannmoment, wie Bodenhaftung, Reifenzustand, Reifenbelastung u.dgl., ständig berücksichtigt werden und eine möglichst genaue Einhaltung der Schaltbedingung ist möglich. Dazu brauchen lediglich über die Steuerungseinrichtung die bei antriebsloser Fahrt und eingelegter Ausgleichsspere oder zugeschaltetem Antrieb auftretenden Drehmomente entsprechend verarbeitet und als Verspannmoment eingespeichert zu werden. Diese Werte korrigieren dann die vom Hersteller eingespeicherte Basisgröße des Verspannmomentes, die rechnerisch oder durch einen geeigneten Meßversuch ermittelt wird.

Das Verspannmoment läßt sich periodisch abfragen, wobei es vorteilhaft ist, wenn die Steuerungseinrichtung jeweils unmittelbar vor dem Ansteuern der Stellvorrichtung das Verspannmoment bestimmt und der Ist-Kennwertbildung zugrundelegt, da dann praktisch jeweils im Zeitpunkt des Auslösens der Sperre der geltende Wert des Verspannmomentes erfaßt wird und außerdem die für die Ermittlung des Verspannmomentes erforderlichen Bedingungen, wie eingelegte Kupplung und antriebslose Fahrt, gegeben sind oder sich durch entsprechendes Ansteuern des Antriebsmotors leicht verwirklichen lassen.

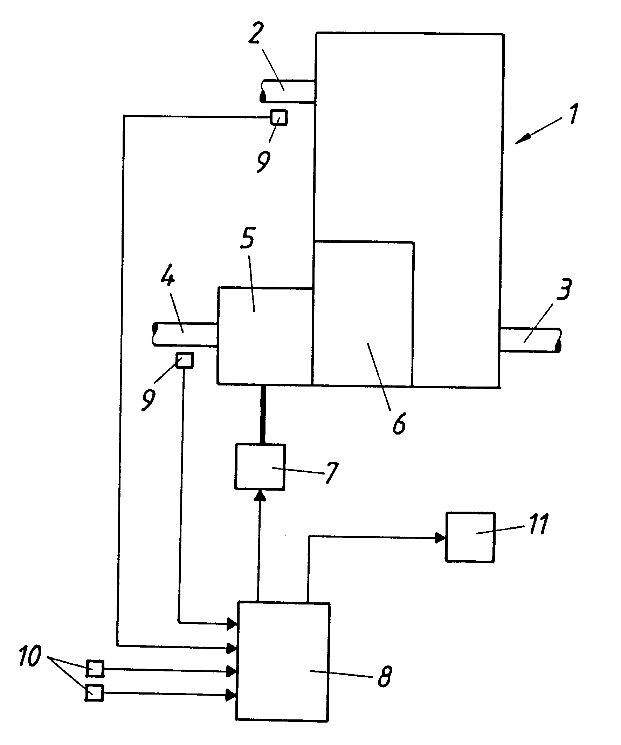

In der Zeichnung ist der Erfindungsgegenstand an Hand eines Blockschemas beispielsweise näher veranschaulicht.

Ein Verteilergetriebe 1 eines Kraftfahrzeuges weist eine mit dem Motor des Kraftfahrzeuges über die nicht dargestellte Fahrkupplung verbundene Getriebeantriebswelle 2 und zwei Abtriebswellen 3, 4 auf, wobei eine formschlüssige Kupplung 5 als Sperre für ein im Verteilergetriebe 1 integriertes, den beiden Abtriebswellen 3, 4 zugeordnetes Ausgleichsgetriebe 6 oder zum Zuschalten eines von der Abtriebswelle 4 abgeleiteten Antriebsstranges vorgesehen ist. Zur Betätigung der formschlüssigen Kupplung 5 gibt es einen Stelltrieb 7, der über eine Steuerungseinrichtung 8 im Sinne eines Öffnens oder Schließens der Kupplung 5 ansteuerbar ist. An wenigstens zwei der Getriebewellen, im dargestellten Ausführungsbeispiel an der Antriebswelle 2 und der einen Abtriebswelle 4 sind Drehmomentengeber 9 angeordnet, die die auftretenden Drehmomentbelastungen der Wellen laufend erfassen und der Steuerungseinrichtung 8 einlesen. Außerdem werden über weitere Geber 10 zusätzliche Fahrzustandsdaten des Kraftfahrzeuges, wie Wellendrehzahlen, Lenkausschlag u.dgl.

und Signale über die Stellung der Kupplung 5, den gewählten Fahrgetriebegang, die Fahrfußhebelstellung u. dgl. der Steuerungseinrichtung 8 eingegeben, die aus diesen Daten das Auftreten eines übermäßigen Schlupfes an den Fahrzeugrädern erkennt und den Stelltrieb 7 im Einrücksinn der Kupplung 5 ansteuert.

Ist die Kupplung 5 eingeschaltet, überwacht die Steuerungseinrichtung 8 als Kennwert zum Ausschalten der Kupplung das Verhältnis der durch die beiden Drehmomentengeber 9 eingegebenen Drehmomentenwerte und sobald dieses Drehmomentenverhältnis einen durch die Getriebeübersetzung bestimmten Sollwert erreicht, wird der Stelltrieb 7 im Ausrücksinn der Kupplung 5 angesteuert.

Um nun das Ausrücken der formschlüssigen Kupplung 5 nicht durch vorhandene Verspannmomente zu be- oder gar verhindern, gibt es eine zusätzliche Stellvorrichtung 11, die zur Änderung der Drehmomentbelastung in nicht weiter dargestellter Weise eine Bremse des Fahrzeuges oder auch die Regelstange der Einspritzpumpe des Kraftfahrzeugmotors od.dgl. betätigt. Diese Stellvorrichtung 11 ist über die Steuerungseinrichtung 8 in Abhängigkeit vom Verhältnis aus Antriebsmoment und Verspannmoment ansteuerbar und sorgt für das Erreichen der Schaltbedingung zum Ausschalten der Kupplung 5. Sobald daher von der Steuerungseinrichtung 8 die Öffnungsbedingung der Kupplung 5 erkannt und der Stelltrieb 7 im Öffnungssinn der Kupplung 5 angesteuert wird, kommt es gleichzeitig zu einem Ansteuern der Stellvorrichtung 11, um die für das Lösen der Kupplung erforderliche Schaltbedingung zu erfüllen, so daß nach dem Erreichen der Schaltbedingung die Kupplung 5 tatsächlich wieder ausgerückt und damit die Ausgleichssperre geöffnet oder der Zusatzantrieb abgeschaltet werden kann.

## Patentansprüche

1. Verteilergetriebe für Kraftfahrzeuge mit einem sperrbaren Ausgleichsgetriebe oder einem zuschaltbaren Antriebsstrang, wobei ein Stelltrieb zum Betätigen der Sperr- oder Zuschaltvorrichtung vorgesehen ist und eine mit Gebern zum Erfassen der Drehmomentbelastung wenigstens zweier der Getriebean- und -abtriebswellen und anderer Fahrund Betriebszustandsgrößen des Fahrzeuges verbundene Steuerungseinrichtung den Stelltrieb in Abhängigkeit vom Vergleich der aus den eingelesenen Zustandsgrößen sich ergebenden Ist-Kennwerte mit einspeicherbaren Soll-Kennwerten ansteuert, dadurch gekennzeichnet, daß nach dem Einschalten der als formschlüssige Kupplung (5) ausgebildeten Sperr- oder Zuschaltvorrichtung als Kennwert zum Ausschalten dieser Kupplung (5) das Verhältnis der an zwei der Getriebewellen (2, 4) auftretenden Drehmomente dient und die Steuerungseinrichtung (8) bei Übereinstimmung dieses laufend ermittelten Momentenverhältnisses als Ist-Kennwert mit einem durch die Getriebeübersetzung bestimmten Momentenverhältnis als Soll-Kennwert zusätzlich zum die Kupplung (5) im Öffnungssinn betätigenden Stelltrieb (7) eine weitere Stellvorrichtung (11) zur Änderung der Drehmomentbelastung des An- und/oder Abtriebsstranges in Abhängigkeit von der Abweichung einer aus dem Drehmoment an der Getriebeantriebswelle (2) und dem bei Fahrt des Fahrzeuges mit gesperrtem Ausgleichsgetriebe (6) oder zugeschaltetem Antriebsstrang (4) im Antriebssystem auftretenden Verspannmoment ermittelten Verhältniszahl als Ist-Kennwert gegenüber einer material- und konstruktionsspezifischen Konstanten als Soll-Kennwert ansteuert.

2. Verteilergetriebe nach Anspruch 1, dadurch gekennzeichnet, daß die bei einer antriebslosen Fahrt mit gesperrtem Ausgleichsgetriebe (6) oder zugeschaltetem Antriebsstrang (4) über die Drehmomentgeber (9) erfaßbaren Drehmomentwerte der Steuerungseinrichtung (8) zur Bestimmung und/oder Justierung des Verspannmomentes eingebbar sind.

3. Verteilergetriebe nach Anspruch 2, dadurch gekennzeichnet, daß die Steuerungseinrichtung (8) jeweils unmittelbar vor dem Ansteuern der Stellvorrichtung (11) das Verspannmoment bestimmt und der Ist-Kennwertbildung zugrundelegt.

## Claims

1. A transfer box for motor vehicles with a lockable differential gear or an engageable driving train, a servo drive being provided for actuating the locking or engaging device and a control device connected to sensors for detecting the torque load of at least two of the driving and driven shafts of the transmission and other travelling and operating variables of the vehicle actuating the servo drive as a function of the comparison of the actual characteristic values - produced from the read-in variables - with storable nominal characteristic values, characterized in that after the engagement of the locking or engaging device constructed as a positively locking clutch (5) the ratio of the torques occurring at two of the transmission shafts (2, 4) is used as a characteristic value for disengaging this clutch (5), and when this currently determined torque ratio as the actual characteristic value coincides with a torque ratio determined by the transmission ratio as the actual characteristic value in addition to the servo drive (7) actuating the clutch (5) so as to open it the control device (8) actuates a further adjusting device (11) for altering the torque load of the driving and/or driven train as a function of the deviation of a ratio - determined from the torque at the driving shaft (2) of the transmission and the reaction torque occurring in the drive system during the travel of the vehicle with the differential gear (6) locked or the driving train (4) engaged - as the actual characteristic value as against a constant which Is specific to the material and the design as the nominal characteristic value.

2. A transfer box according to Claim 1, characterized in that the torque values - detectable by way of the torque sensors (9) during coasting with the differential gear (6) locked or the driving train (4) engaged - of the control device (8) can be fed in for determining and/or adjusting the reaction torque.

3. A transfer box according to Claim 2, characterized in that the control device (8) determines the reaction torque in each case immediately before the actuation of the adjusting device (11) and constitutes the basis for forming the actual characteristic value.

**Revendications**

1. Boîte de transfert pour véhicules à moteur avec un différentiel blocable ou avec un arbre d'entraînement pouvant être accouplé, avec lequel il est prévu un servomécanisme pour la manoeuvre du dispositif de blocage ou du dispositif d'accouplement, et un dispositif de commande relié à des détecteurs pour détecter le couple de rotation de deux au moins des arbres menant et menés de la boîte de vitesses, ainsi que d'autres paramètres de marche et de fonctionnement du véhicule, commande le servomécanisme en fonction de la comparaison des valeurs caractéristiques réelles découlant des paramètres de la situation existante fournis par les détecteurs à des valeurs de consigne prescrites mémorisables, caractérisée en ce qu'après la fermeture du dispositif de blocage ou d'accouplement constitué par un accouplement (5) à encastrement de formes, il est utilisé comme valeur caractéristique pour l'ouverture de cet accouplement (5) le rapport entre les couples de rotation apparaissant sur deux des arbres (2, 4) de la boîte de vitesses et, en fonction de la concordance de ce rapport entre les couples de rotation déterminé en continu comme valeur caractéristique réelle avec un rapport entre les couples de rotation déterminé par le rapport de transmission de la boîte de vitesses pris comme valeur caractéristique de consigne, le dispositif de commande (8) commande, outre le servomécanisme (7) actionnant l'accouplement (5) dans le sens de l'ouverture, un servomécanisme (11) supplémentaire pour la modification du couple de rotation chargeant l'arbre menant et/ou l'arbre mené en fonction de l'écart entre un chiffre de rapport déterminé pris comme valeur caractéristique réelle à partir du couple de rotation de l'arbre menant (2) de la boîte de vitesses et du couple de contrainte apparaissant dans le système d'entraînement pendant la marche du véhicule avec le différentiel (6) bloqué ou l'arbre d'entraînement (4) accouplé, en comparaison d'une constante spécifique du matériel et de la construction prise comme valeur caractéristique de consigne.

2. Boîte de transfert selon la revendication 1 caractérisée en ce que, pendant la marche du véhicule sans entraînement avec le différentiel (6) bloqué ou l'arbre d'entraînement (4) accouplé, les valeurs du couple de rotation détectables par l'intermédiaire des détecteurs (9) du couple de rotation peuvent être fournies au dispositif de commande (8) pour la détermination et/ou l'ajustement du couple de contrainte.

3. Boîte de transfert selon la revendication 2 caractérisée en ce que le dispositif de commande (8) détermine le couple de contrainte immédiatement avant la commande par le servomécanisme (11) et l'utilise comme base pour former la valeur caractéristique réelle.